# EUROPEAN PATENT APPLICATION

(11) **EP 3 348 943 A1**
(43) Date of publication of application: **18.07.2018**
(21) Application number: 17150929.2
(22) Date of filing: 11.01.2017
(51) Int. Cl.: F27B 17/00, C04B 41/00

(54) **DEVICE AND METHOD FOR OPTIMIZING NATURAL STONE**

(71) Applicant: Wishing Star Marble Co. Ltd., Hong Kong (HK)
(72) Inventor: Wen, Carol, Hong Kong (HK); Kong, Joe Hung, Hong Kong (HK)
(74) Representative: Cabinet Chaillot

(57) **Abstract**

The present invention provides a device and method for optimizing natural stone. The device comprises an electrolytic furnace comprising a furnace body having an opening at its top end; a seal cover which covers the opening of the furnace body in a movable manner to thermally insulate the furnace body; and a heating unit which is disposed in the furnace body to heat and optimize the natural stone placed in the furnace body; and wherein a hoisting equipment is provided outside the electrolytic furnace, allowing that the natural stone is moved into or out of the electrolytic furnace from the opening of the furnace body. The method provided by the present invention uses the foregoing device for optimizing natural stone to electrolyze the stone. The present invention may reduce the floor space of the electrolytic furnace, cut the generation cost of the electrolytic furnace and raise stone electrolysis efficiency.

## Description

### TECHNICAL FIELD OF THE INVENTION

The present invention relates to the field of stone processing, specifically to a method for electrolyzing stones by an electrolytic furnace, as well as a stone electrolyzing device.

### BACKGROUND OF THE INVENTION

Stones are common decorative materials and widely applied owing to their firm texture. The veins, colors, texture and other physical properties of natural stones are fixed in general. People wish to change them through processing to meet their requirements for stones.

Stone electrolysis is a method for deep processing of stones and was introduced about more than 10 years ago. Stone electrolysis is to make the inherent components of stones take a series of chemical reactions and physical reactions under the action of high temperature to change the color, texture, vein and other physical characteristics of stone surface. It is equivalent to turn natural stones into a new kind of stones not existing in the nature.

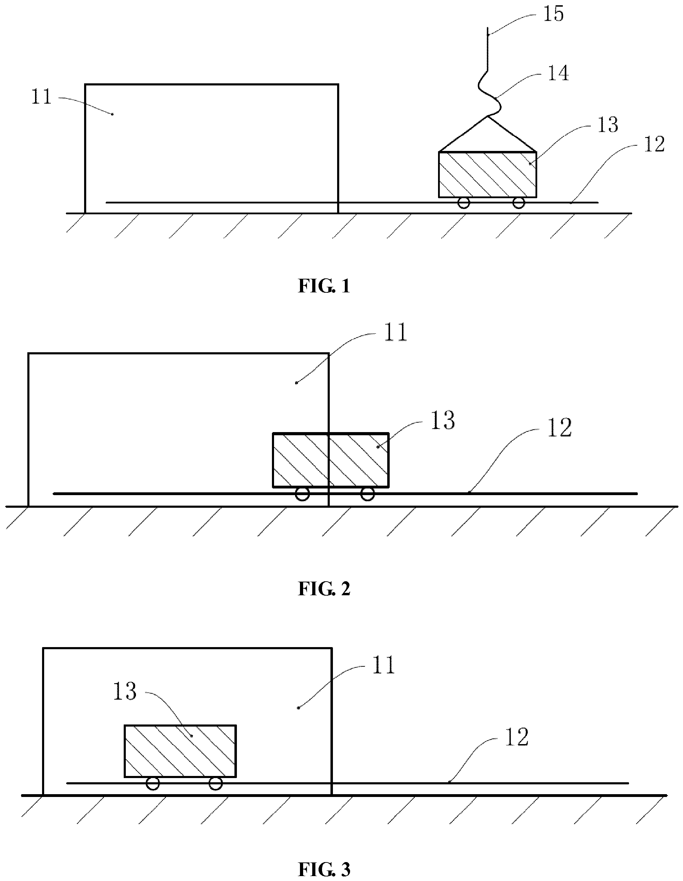

The main equipment of stone electrolysis is electrolytic furnace. A typical electrolytic furnace may be a closed room. As shown in FIG. 1, the electrolytic furnace 11 is a room with a large volume. This room is built on the ground and has a number of side walls. A door is opened on one of the side walls. The top wall of the room is fixed to the side walls. Typically, the room is made of bricks and concrete.

A stone 13 has a large volume and weight. In order to make for the transport of the stone 13 to an electrolytic furnace 11, typically a transport track 12 needs to be provided, a transport car is arranged on the transport track 12, the transport track 12 is extended from the inside of the electrolytic furnace 11 to the outside of the electrolytic furnace 11. When a stone is transported to the electrolytic furnace 11, firstly a transport car is driven to the outside of the electrolytic furnace 11, and hoisting equipment is used to hoist the stone 13 onto the transport car, as shown in FIG. 1. The lifting arm 15 of the hoisting equipment hoists the stone 13 onto the transport car via a rope 14.

Then, as shown in FIG. 2, the transport car moves on the track 12 and enters the electrolytic furnace 11. Lastly, as shown in FIG. 3, when the transport car completely enters the electrolytic furnace 11, the stone 13 also completely enters the electrolytic furnace 11. Now, the door of the electrolytic furnace 11 may be closed to form a closed space inside the electrolytic furnace 11. By now, a heating unit may be started, such as: heating wires disposed inside the electrolytic furnace 11, to heat the stone 13 so that the stone 13 takes chemical reactions and physical reactions at high temperature, thereby changing the vein, color, texture and other physical characteristics of the stone. After heating is completed, the stone 13 needs to be cooled down. Typically the door of the electrolytic furnace 11 is opened and the stone 13 is transported to the outside of the electrolytic furnace 11 by a transport car. In the end, the stone 13 needs to be hoisted to the processing position in the next step by hoisting equipment.

As the stone 13 has a large volume, the electrolytic furnace 11 needs to have a large volume, too. Moreover, the stone electrolysis equipment also needs to be provided with a transport track 12, a transport car, etc., and the transport track 12 needs to be extended to the outside of the electrolytic furnace 11, so the entire stone electrolysis equipment needs to occupy a large area, resulting in high generation and maintenance cost of the stone electrolysis equipment. Furthermore, in the process of stone electrolysis, a stone 13 needs to be transported by a transport car and hoisted by hoisting equipment, resulting in a long processing time and affecting stone processing efficiency.

### SUMMARY OF THE INVENTION

According to one aspect of the present invention, the present invention provides a method for optimizing natural method, which has high stone electrolysis efficiency and can reduce stone electrolysis cost.

According to another aspect of the present invention, the present invention provides a device for optimizing natural method, which occupies a small floor space and has low construction cost.

In order to realize the foregoing objects, the present invention provides a device for optimizing natural stone, comprising an electrolytic furnace, wherein the electrolytic furnace comprises:
a furnace body having an opening at its top end;
a seal cover which covers the opening of the furnace body in a movable manner to thermally insulate the furnace body; and
a heating unit which is disposed in the furnace body to heat and optimize the natural stone placed in the furnace body;
and wherein a hoisting equipment is provided outside the electrolytic furnace, allowing that the natural stone is moved into or out of the electrolytic furnace from the opening of the furnace body.

Further, the electrolytic furnace may comprise an insulating cover, which is put on the seal cover in a movable manner to strengthen the thermal insulation effect inside the electrolytic furnace.

The foregoing embodiment indicates the electrolytic furnace does not open a door on one side wall to transport a stone into or out of it and instead a seal cover and an insulating cover which can be connected in a movable manner are provided on the top of the furnace body. In this way, before stone electrolysis, a stone may be hoisted into the electrolytic furnace by hoisting equipment from the top of the electrolytic furnace and after the stone is hoisted into the furnace body, the seal cover and the insulating cover are hoisted onto the furnace body in turn. By now, stone electrolysis may be conducted. After stone electrolysis, only hoisting equipment needs to be used to hoist the insulating cover and the seal cover away and then hoist the stone out of the furnace body, so no transport track needs to be provided inside the electrolytic furnace. That is to say, the floor space occupied by the electrolytic furnace will be reduced significantly. Further, no transport track needs to be built during construction of the electrolytic furnace and no transport car needs to be used, so the construction cost of the electrolytic furnace and the cost of stone electrolysis will be reduced significantly. In addition, as no transport car is needed to transport the stone into or out of the electrolytic furnace during stone electrolysis, the efficiency of stone electrolysis is raised. The insulating cover may insulate heat. Moreover, by simply removing the insulating cover, cooling may be realized. Further, based on cooling speed, the area of removal of the insulating cover from the opening may be adjusted. It is movable and practical.

According to a preferred embodiment, the furnace body comprises a bottom wall comprising a supporting layer disposed at the bottom of the furnace body to bear the weight of the stone; and an insulating layer disposed on the supporting layer to thermally insulate the furnace body; and a side wall vertically extended upwards from the whole edge of the bottom wall.

Further, the bottom wall may further comprise a bottom layer disposed underneath the supporting layer to assure the supporting layer is paved on a flat surface. Preferably, the bottom layer is made of river sand, the supporting layer is made of light-weight insulating bricks or steel, and the insulating layer is made of ceramic fibre boards.

Thus it can be seen, the bottom wall of the furnace body comprises a supporting layer and an insulating layer, and the insulating layer not only plays a role in bearing weight but also has thermal insulation properties. Further, ceramic fibre boards have desirable thermal insulation properties and high strength and are resistant to high temperature, and the bottom wall is made of insulating bricks and ceramic fibre boards to provide it with desirable thermal insulation properties.

According to a preferred embodiment, the side wall comprises an external layer which assures the strength and stiffness of the side wall; and an internal layer which fits with the external layer to thermally insulate the furnace body.

Preferably, the external layer is made of light-weight insulating bricks or steel, and the internal layer is made of ceramic fibre boards.

Apparently, the side wall of the furnace body comprises an insulating brick layer of the internal layer and a ceramic fibre board layer of the external layer, the insulating brick layer is mainly for bearing weight and can insulate heat, while the ceramic fibre boards have desirable thermal insulation properties and high strength and are resistant to high temperature. The side wall is made of insulating bricks and ceramic fibre boards to provide it with desirable thermal insulation properties and enhance the thermal insulation effect of the electrolytic furnace.

According to another embodiment, the electrolytic furnace comprises a rack for placement of a stone to help integrally move the stone into or out of the electrolytic furnace. Preferably, a lifting member is disposed at one end of the rack and cooperates with the hoisting equipment to integrally move the rack loaded with a stone into or out of the electrolytic furnace. Further, the electrolytic furnace may further comprise a supporting member disposed on the bottom wall of the furnace body to support the placement rack.

Apparently, the stone may be placed on the rack. Further, a heating unit (such as: heating wires) is disposed on the rack, and has a short distance from the stone, thereby providing a favorable condition for heating of the stone.

According to another embodiment, a stirrer is disposed in the furnace body so that the heat generated by the heating unit is evenly spread in the furnace body. Further, the stirrer may comprise a blade and a motor driving the blade which is positioned outside the furnace body to drive the blade through a spindle for rotation.

Apparently, a stirrer inside the electrolytic furnace helps stir air evenly during heating of the heating unit, thereby making the temperature even inside the electrolytic furnace, facilitating stone electrolysis and raising stone electrolysis efficiency. Further, as the motor is outside the electrolytic furnace, it avoids high temperature inside the electrolytic furnace, which will affect its service life.

In order to realize another object of the present invention, the stone optimization method provided by the present invention includes the following steps:
building a furnace body of an electrolytic furnace having an opening at its top end, which is provided a heating unit therein;
using a hoisting equipment to move a stone into the furnace body from the opening of the electrolytic furnace, and place the stone in the furnace body;
using the hoisting equipment to transport a seal cover to above the opening of the furnace body, and put the seal cover on the opening in a movable manner; and
starting the heating unit to heat the stone, and moving the seal cover away from the opening and taking out the optimized stone after cooling.

Preferably, the method further comprises using the hoisting equipment to transport an insulating cover to above the seal cover, and put the insulating cover on the seal cover in a movable manner after the step of putting the seal cover on the opening in a movable manner.

The foregoing embodiment indicates that before stone electrolysis, a stone is hoisted into the electrolytic furnace by hoisting equipment from the top of the electrolytic furnace at first and after the stone is hoisted into the furnace body, the seal cover and the insulating cover are put on the open end of the furnace body in turn to form a closed space of the electrolytic furnace. By now, heating and electrolysis of the stone may be started. After stone electrolysis, only hoisting equipment needs to be used to remove the insulating cover and the seal cover and move the stone out of the furnace body.

Further, as no transport track needs to be provided inside the electrolytic furnace, the floor space occupied by the electrolytic furnace will be reduced significantly. Further, no transport track needs to be built during construction of the electrolytic furnace and no transport car needs to be used, so the construction cost of the electrolytic furnace and the cost of stone electrolysis will be reduced significantly. In addition, as no transport car is needed to transport the stone into or out of the electrolytic furnace during stone electrolysis, the efficiency of stone electrolysis is raised significantly.

As a preferred embodiment, a stirrer is disposed inside the furnace body to stir the air inside the furnace body and realize even spread of heat.

Apparently, a stirrer inside the electrolytic furnace helps stir air evenly during heating of the heating unit, thereby making the temperature even inside the electrolytic furnace, facilitating stone electrolysis and raising stone electrolysis efficiency.

### BRIEF DESCRIPTION OF THE DRAWINGS

Below the present invention is further described by referring to the accompanying drawings and embodiments, wherein:
FIG. 1 is a schematic view of the first state of stone electrolysis by using an electrolytic furnace in the prior art;
FIG. 2 is a schematic view of the second state of stone electrolysis by using an electrolytic furnace in the prior art;
FIG. 3 is a schematic view of the third state of stone electrolysis by using an electrolytic furnace in the prior art;
FIG. 4 is a schematic view of the first state of stone electrolysis by using device for optimizing natural stone provided by the present invention according to an embodiment of the present invention;
FIG. 5 is a schematic view of the second state of stone electrolysis by using device for optimizing natural stone provided by the present invention according to an embodiment of the present invention;
FIG. 6 is a schematic view of the third state of stone electrolysis by using device for optimizing natural stone provided by the present invention according to an embodiment of the present invention;
FIG. 7 is a schematic view of an electrolytic furnace of device for optimizing natural stone according to an embodiment of the present invention at the first angle of view;
FIG. 8 is a schematic view of an electrolytic furnace of device for optimizing natural stone according to an embodiment of the present invention at the second angle of view;
FIG. 9 is a schematic view of an electrolytic furnace of the device for optimizing natural stone according to an embodiment of the present invention at the third angle of view;
FIG. 10 is a schematic view of a supporting piece in a furnace body of the device for optimizing natural stone according to an embodiment of the present invention; and
FIG. 11 is a schematic view of a rack in a furnace body of the device for optimizing natural stone according to an embodiment of the present invention.

### DETAILED DESCRIPTION OF THE INVENTION

The device for optimizing natural stone provided by the present invention is a device for electrolysis operation of natural stones, i.e.: heating a natural stone to make it take chemical reactions and physical reactions at high temperature, thereby changing its color, vein and texture and making its external morphology more diversified to meet people's requirements for decoration.

The device for optimizing natural stone in this embodiment comprises an electrolytic furnace and hoisting equipment near the electrolytic furnace. The hoisting equipment may comprise a lifting arm and may transport a stone, a seal cover and an insulating cover to the inside or above the furnace body of the electrolytic furnace.

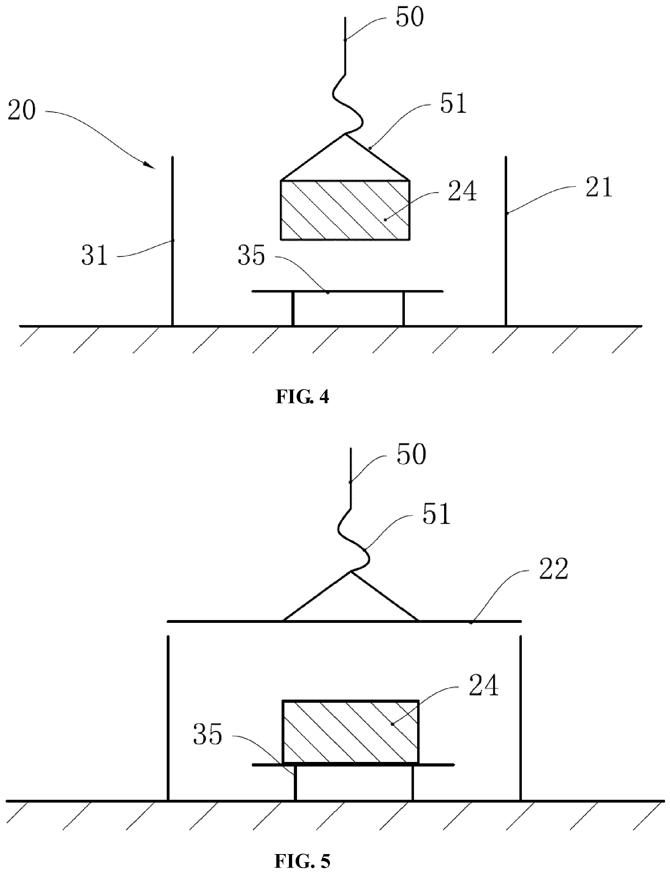

As shown in FIG. 4-FIG. 11, before stone electrolysis, an electrolytic furnace 20 needs to be built at first. The electrolytic furnace 20 comprises a furnace body 21 with an opening at its top end, and a seal cover 22. The seal cover 22 is put on the opening of the furnace body in a movable manner. The furnace body 21 comprises a bottom wall 21 and a side wall 31 above the bottom wall 21. Further, the electrolytic furnace 20 further comprises an insulating cover 23, which is put on the seal cover 22 in a movable manner.

Preferably, the bottom wall 21 and the side wall 31 both have a thermal insulation and load bearing effect to support the seal cover 22 and the insulating cover 23 above the furnace body 21. Besides, no door opening on the side wall 31 is needed for transporting a stone 24. The stone 24 may be transported into the furnace body 21 from the top of the furnace body 21. Of course, a small window or an opening for access of maintenance personnel may be reserved on the side wall 31 to make for ventilation and heat dissipation inside the furnace body 21 and facilitate maintenance personnel to enter the furnace body 21 and check, repair and install the device inside the furnace body 21. Of course, the device inside the electrolytic furnace 20 may also be transported into the electrolytic furnace 20 from the door opening.

A rack for placement of a stone is disposed in the furnace body 21. The stone 24 to be electrolyzed may be placed on the rack. The rack needs to have an enough bearing capacity in order to bear the weight of the stone 24. Preferably, in an embodiment, the rack is made of a metal material with high hardness and strength, such as: steel or iron.

Hoisting equipment, such as a crane, is disposed near the furnace body 21. A lifting arm 50 is disposed on the hoisting equipment so that a stone 24 can be lifted via the lifting arm 50 and transported into the furnace body 21 from an open end of the furnace body 21.

Then, as shown in FIG. 5, the stone 24 is placed in the furnace body 21, and a seal cover 22 is transported by the hoisting equipment to the top opening the furnace body 21. Specifically, a rope 51 may be used to place the seal cover 22 under the lifting arm 50, lift the lifting arm 50 to above the furnace body 21 and then let the lifting arm 50 descend onto the furnace body 21, making sure the seal cover 22 just cover the furnace body 21. Preferably, locating members may be disposed at the top end of the side wall 31 of the furnace body 21, and fixing members matching the locating members on the side wall 31 are disposed on the periphery of the seal cover 22, thereby firmly fixing the seal cover 22 onto the furnace body 21. For example, a number of hooks are disposed at the top end of the side wall 31, and round holes matching the hooks are disposed on the periphery of the seal cover 22. When the seal cover 22 is transported to above the furnace body 21, the hooks may be put through the round holes of the seal cover 22, thereby realizing relative fixation between the seal cover 22 and the furnace body 21, and avoiding movement of the seal cover 22 relative to the furnace body 21 due to strong wind.

Of course, the seal cover 22 is put on the furnace body 21 in a movable manner. In other words, disassembly between the seal cover 22 and the furnace body 21 may be realized through simple operation. Preferably, the seal cover 22 is made of iron plates and mainly for realizing sealing of the upper end of the furnace body 21. Of course, a sealing element, such as sponge or rubber, may be arranged on the periphery of the seal cover 22 to avoid external dust or moist air entering the furnace body 21 and affecting the electrolysis of the stone 24.

After the seal cover 22 is put on the furnace body 21, the door and window on the side wall 31 of the furnace body 21 are closed to form a closed space inside the furnace body 21.

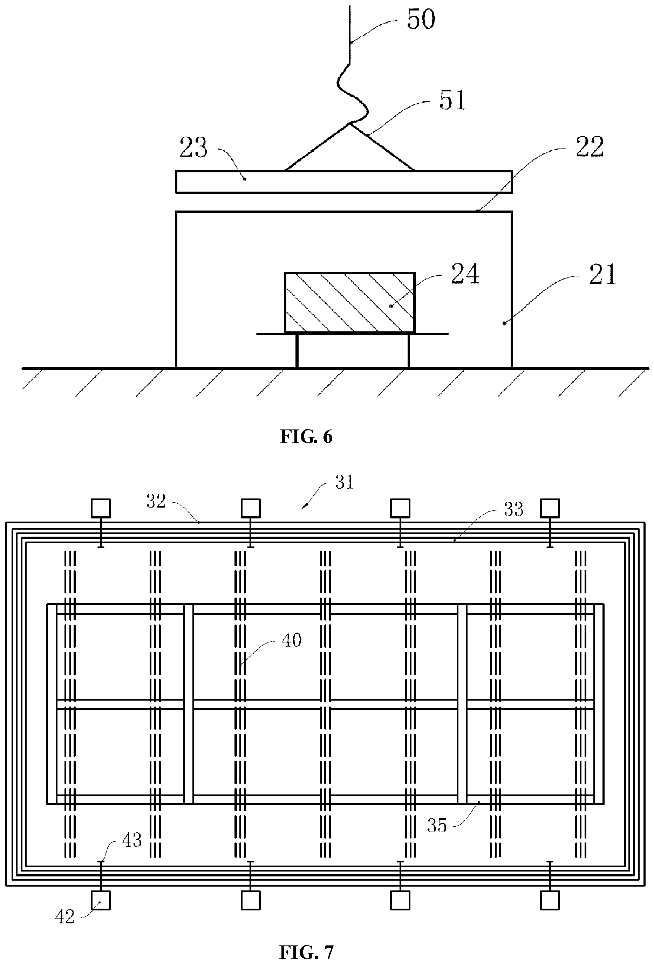

After the seal cover 22 is put on the furnace body 21, as shown in FIG. 6, an insulating cover 23 is put on the seal cover 22 to enhance the thermal insulation effect. The insulating cover 23 is also put on the seal cover 22 by the hoisting equipment, i.e.: a lifting arm 50 of the hoisting equipment is used to lift the insulating cover 23 via a rope 51, and transport it to above the seal cover 22, and then slowly descend it onto the seal cover 22. In order to realize fixation between the insulating cover 23 and the seal cover 22, locating members may be disposed on the seal cover 22, and fixing members matching these locating members are disposed on the insulating cover 23, such as hooks and round holes, or the match between the insulating cover 23 and the seal cover 22 may be realized through the match between pins and pin holes, to avoid displacement of the insulating cover 23 in strong wind. Preferably, the insulating cover 23 may be made of various kinds of thermal insulation materials, such as foamed material or ceramic fibre boards.

After the insulating cover 23 is put on the seal cover 22, stone electrolysis operation may be conducted. In an embodiment, a heating unit, such as heating wires, is disposed in the furnace body 21 to carry out heating. During electrolysis operation, the heating wires are electrified and generate heat to heat the stone 24 so that the stone 24 takes chemical reactions and physical reactions at high temperature, thereby changing the color, vein, texture and other physical characteristics of the stone 24.

After the electrolysis is completed, the stone 24 needs to be cooled down. In the prior art, a transport car is used to transport the stone out of the electrolytic furnace, and let it cool naturally in a natural environment. In this embodiment, as the electrolytic furnace 20 does not have a door opening for access of the stone 24, in order that the stone is cooled in a natural environment, hoisting equipment is used to remove the insulating cover 23 and the seal cover 22 from the top end of the furnace body 21. In this way, an open end is formed at the top of the furnace body 21 and external cold air may directly enter the furnace body 21. Moreover, as the top of the furnace body 21 is open, hotter air will ascend rapidly and colder air will descend rapidly. Further, the stone 24 is at the lower end of the furnace body 21, so it can be cooled in colder air.

Preferably, depending on cooling time and cooling speed, the insulating cover 23 and the seal cover 22 may be partially moved away from the opening of the electrolytic furnace. The open area may be decided according to need, thereby regulating the cooling speed of the furnace body.

Apparently, no transport track needs to be provided inside the electrolytic furnace 20 of the present invention, and neither a transport car is needed to transport the stone 24 to the electrolytic furnace. Therefore, the entire device for optimizing natural stone only comprises an electrolytic furnace 20 and hoisting equipment that may be moved to beside the electrolytic furnace 20. The device for optimizing natural stone occupies a smaller floor space, and may reduce production and construction cost of the device for optimizing natural stone. Further, during stone electrolysis, no transport car is needed to transport the stone 24 into the electrolytic furnace 20 and the transport can be completed by hoisting equipment alone. Therefore, the electrolysis efficiency of the stone 24 may be raised and the time of stone electrolysis may be reduced.

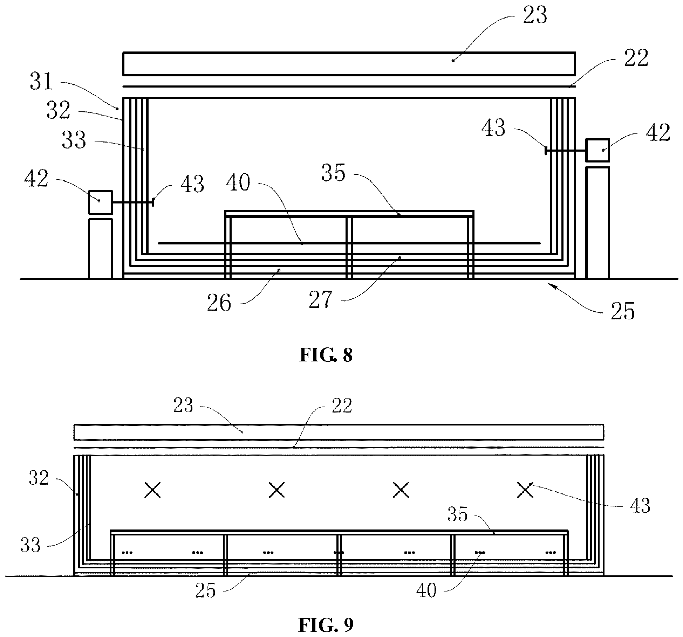

Below the structure of the electrolytic furnace 20 is described in details by referring to FIG. 7-FIG. 9. FIG. 7 is a top view of the structure of the electrolytic furnace 20. FIG. 8 is a schematic view of the electrolytic furnace 20 viewed from the left. FIG. 9 is the schematic view of the electrolytic furnace 20 viewed from the front. The bottom wall 25 of the electrolytic furnace 20 is built on the ground and comprises a bottom layer (not shown); a supporting layer 26 disposed on the bottom layer to bear the weight of the stone together with the bottom layer; and an insulating layer 27 disposed on the supporting layer to thermally insulate the furnace body.

Preferably, in an embodiment, the bottom layer is made of river sand, with a height of about 5-6cm, to assure the flatness of the bottom and play a role in supporting the bottom. The supporting layer 26 is made of light-weight insulating bricks or steel, and the insulating layer 27 is made of ceramic fibre boards.

As shown in FIG. 7 and FIG. 8, the side wall 31 of the furnace body 21 comprises an external layer 32 that can assure the strength and stiffness of the side wall. Besides, in order to thermally insulate the furnace body, an internal layer 33 is fit on the external layer 32. According to an embodiment of the present invention, the external layer 32 is an integral structure built on the bottom wall by using insulating bricks and concrete or other materials, and the internal layer 33 is made of ceramic fibre boards.

Preferably, based on the need of thermal insulation, the bottom wall 25 and the side wall 31 may be configured with different quantity and thickness of ceramic fibre boards. For example, 2 or 3 layers of approximately 3-6cm thick ceramic fibre boards are adopted. Further, different thickness of the light-weight insulating brick layer may be configured. For example, 1 or 2 layers are adopted and each layer is about 5-8cm thick.

As the bottom wall 25 and the side wall 31 of the furnace body 21 both have an insulating layer, and the top of the furnace body 21 is covered with an insulating cover 23, the inside of the entire electrolytic furnace 20 forms a chamber with very good thermal insulation properties, thereby ensuring heat of the furnace body 21 won't be easily dissipated during electrolysis of the stone 24, and raising utilization ratio of thermal energy.

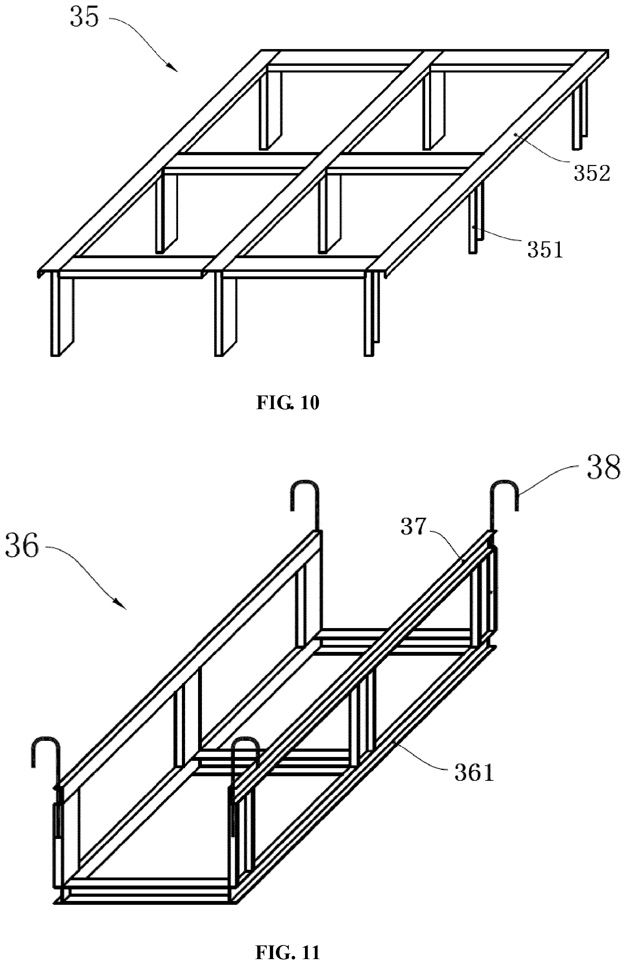

As shown in FIG. 10 and FIG. 11, there is a supporting member 35 and a rack in the furnace body 21, wherein the rack is for placing a stone and fixing the stone in the rack, and the supporting member 35 is disposed on the bottom wall of the furnace body 21, and supports the rack and the stone.

Specifically, the supporting member 35 comprises a plurality of supporting legs 351 and a supporting frame 352. The rack is placed on the supporting frame 352. Typically, in order to assure the force and stiffness of support, the supporting legs 351 and the supporting frame 352 are all made of materials with high hardness, such as steel. According to the size of the furnace body, a plurality of supporting members 35 may be disposed in the furnace body in order to arrange a plurality of racks, such as 4-8.

In one embodiment of the invention, the rack is a placement rack 36 and is formed by fixing a plurality of blocky materials 361 with enough hardness and stiffness. For example, it is made of blocky steel parts by welding. In order to raise the strength of the placement rack 36, reinforcement blocks 37 are horizontally disposed on the blocky steel parts, and the reinforcement blocks 37 may be welded on the blocky steel parts. Preferably, in order that the placement frame 36 can be moved into or out of the furnace body 21 by hoisting equipment, a lifting member 38 is disposed at one end of the placement frame 36. The lifting member 38 may match the hoisting equipment, thereby easily moving the placement frame 36 into or out of the supporting piece 35. In one embodiment of the invention, the lifting member 38 is a hook and made of steel and welded on a blocky steel part of the placement frame 36. The hook may match the hook on the lifting arm 50 (not shown).

Further, a heating unit, such as heating wires 40, is disposed in the furnace body 21 to carry out heating. In one embodiment of the invention, the heating wires 40 are disposed under the placement frame 36. As shown in FIG. 7 and FIG. 8, a plurality of heating wires 40 pass from the underneath of the placement frame 36. During heating of a stone 24, the heating wires 40 are electrified to realize heating effect.

After the heating wires 40 are electrified and become hot, in order that the temperature of the air in the furnace body 21 is evener, a stirrer may be disposed in the furnace body 21. The stirrer comprises a plurality of fans. Each fan comprises a motor 42 and blades 43 driven by the motor 42. The motor 42 is connected to the blade 43 through a spindle. As shown in FIG. 7, the motor 42 is located outside the electrolytic furnace 20, i.e.: located outside the side wall 31, while the blades 43 are located in the electrolytic furnace 20, i.e.: located in the side wall 31, so the spindle passes through the side wall 31 of the furnace body 21.

As shown in FIG. 8, the blades 43 on the left and right of the furnace body 21 are not on a same horizontal line, so a plurality of blades 43 may be at different heights to stir the air at different heights and make for evener temperature of the air in the furnace body 21.

The electrolytic furnace used by the device for optimizing natural stone provided by the present invention comprises a furnace body with an opening at its top end. After the stone is transported into the furnace body, a seal cover and an insulating cover may be put on in turn, so the device for optimizing natural stone provided by the present invention occupies a small floor space and has low construction and generation cost. Besides, during stone electrolysis, no transport car is needed to transport the stone, and only hoisting equipment needs to be used to transport the stone, thereby saving the time of stone electrolysis.

It should be noted that the present invention is not limited to the foregoing embodiments, and the changes in the structures of the bottom wall and side wall of the electrolytic furnace, the changes in the form of the furnace body, and the changes in the material of the insulating cover for example should also be included in the protection scope of the claims of the present invention.

## Claims

1. A device for optimizing natural stone comprising an electrolytic furnace, wherein the electrolytic furnace comprises:
a furnace body having an opening at its top end;
a seal cover which covers the opening of the furnace body in a movable manner to thermally insulate the furnace body;
and
a heating unit which is disposed in the furnace body to heat and optimize the natural stone placed in the furnace body;
and wherein a hoisting equipment is provided outside the electrolytic furnace, allowing that the natural stone is moved into or out of the electrolytic furnace from the opening of the furnace body.

2. The device according to claim 1, wherein the electrolytic furnace comprises an insulating cover which is put on the seal cover in a movable manner to strengthen a thermal insulation effect inside the electrolytic furnace.

3. The device according to claim 1, wherein the furnace body comprises a bottom wall comprising a supporting layer disposed at the bottom of the furnace body to bear the weight of the stone; and an insulating layer disposed on the supporting layer to thermally insulate the furnace body; and a side wall vertically extended upwards from the whole edge of the bottom wall.

4. The device according to claim 3, wherein the bottom wall further comprises a bottom layer disposed underneath the supporting layer to assure the supporting layer is paved on a flat surface.

5. The device according to claim 3, wherein the supporting layer is made of light-weight insulating bricks or steel.

6. The device according to claim 3, wherein the insulating layer is made of ceramic fibre boards.

7. The device according to claim 3, wherein the side wall comprises an external layer which assures the strength and stiffness of the side wall; and
an internal layer which fits with the external layer to thermally insulate the furnace body.

8. The device according to claim 7, wherein the external layer is made of light-weight insulating bricks or steel.

9. The device according to claim 7, wherein the internal layer is made of ceramic fibre boards.

10. The device according to claim 1, wherein the electrolytic furnace comprises a rack for placement of the stone to help integrally move the stone into or out of the electrolytic furnace.

11. The device according to claim 10, wherein a lifting member is disposed at one end of the placement rack and cooperates with the hoisting equipment to integrally move the rack loaded with the stone into or out of the electrolytic furnace.

12. The device according to claim 10, wherein the electrolytic furnace comprises a supporting member disposed on the bottom wall of the furnace body to support the placement rack.

13. The device according to claim 1, wherein a stirrer is disposed in the furnace body so that the heat generated by the heating unit is evenly spread in the furnace body.

14. The device according to claim 11, wherein the stirrer comprises a blade and a motor driving the blade which is positioned outside the furnace body to drive the blade through a spindle for rotation.

15. A method for optimizing natural stone, comprising:
building a furnace body of an electrolytic furnace having an opening at its top end, which is provided with a heating unit therein;
using a hoisting equipment to move a stone into the furnace body from the opening of the electrolytic furnace, and place the stone in the furnace body;
using the hoisting equipment to transport a seal cover to above the opening of the furnace body, and put the seal cover on the opening in a movable manner; and
starting the heating unit to heat the stone, and moving the seal cover away from the opening and taking out the optimized stone after cooling.

16. The method according to claim 15, further comprising using the hoisting equipment to transport an insulating cover to above the seal cover, and put the insulating cover on the seal cover in a movable manner after the step of putting the seal cover on the opening in a movable manner.

17. The method according to claim 15, wherein the step of building the furnace body includes:
building a bottom wall and a side wall vertically extended upwards from the whole edge of the bottom wall, wherein
building the bottom wall including the following steps:
building a bottom layer;
building a supporting layer disposed on a bottom layer to bear the weight of a stone together with the bottom layer;
and
building an insulating layer disposed on the supporting layer to thermally insulate the furnace body;
and wherein building the side wall including the following steps:
building an external layer to assure the strength and stiffness of the side wall; and
building an internal layer fitting with the external layer so as to thermally insulate the furnace body.

18. The method according to claim 17, wherein the supporting layer and the external layer are both made of light-weight insulating bricks or steel; and the insulating layer and the internal layer are both made of ceramic fibre boards.

19. The method according to claim 15, further comprising setting a rack for placement of the stone, and loading the stone into the rack so as to integrally move the rack loaded with the stone into or out of the electrolytic furnace under the action of the hoisting equipment.
